# EUROPÄISCHE PATENTSCHRIFT

(11) **EP 3 346 457 B1**
(45) Veröffentlichungstag und Bekanntmachung des Hinweises auf die Patenterteilung: **01.04.2020**
(21) Anmeldenummer: 17150544.9
(22) Anmeldetag: 06.01.2017
(51) Int. Cl.: G09F 9/302, F16M 11/04, G09F 19/02, F16M 11/10, F16M 11/18, F16M 11/20, F16M 13/02, G09F 15/00

(54) **MONITORSYSTEM**
MONITOR SYSTEM
SYSTÈME DE SURVEILLANCE

(43) Veröffentlichungstag der Anmeldung: 11.07.2018
(73) Patentinhaber: Simtec Systems GmbH, 38108 Braunschweig (DE)
(72) Erfinder: KAUFMANN, Bernd, 38124 Braunschweig (DE)
(74) Vertreter: Gramm, Lins & Partner Patent- und Rechtsanwälte PartGmbB

(56) Entgegenhaltungen:
- CN-A- 105 179 902
- KR-A- 20140 073 791
- US-A1- 2004 031 893
- US-A1- 2009 050 763
- US-A1- 2012 224 311
- US-A1- 2013 027 618

## Beschreibung

Die Erfindung betrifft ein Monitorsystem mit einem ersten Monitor, einem zweiten Monitor, einem dritten Monitor und zumindest einem vierten Monitor sowie einer Basis und bei dem die Monitore in je zumindest zwei Freiheitsgraden motorisch bewegbar an der Basis befestigt sind. Derartige Monitorsysteme sind beispielsweise als Monitorwände bekannt und dienen dazu, Bilder oder Filme auf großen Flächen darstellen zu können, ohne aufwendig einen großen Monitor herstellen zu müssen. Nachteilig an derartigen Systemen ist, dass sie die Aufmerksamkeit eines Betrachters nur für eine gewisse Zeit binden können.

Die US 2012/0224311 A1 und die KR 2014 0073791 A betreffen motorisch bewegbare Monitorsysteme gemäß des Oberbegriffs des Hauptanspruchs. Die US 2013/0027618 A1 betrifft ein statisches Trägersystem für Monitore mit Scherenantrieben. Auch die CN 105179902 A und US 2004/0031893 A1 betreffen statische Monitorträgersysteme. Die US 2009/0050763 A1 betrifft eine Monitorhalterung für eine Wand.

Der Erfindung liegt die Aufgabe zu Grunde, ein Monitorsystem vorzuschlagen, das Nachteile im Stand der Technik vermindert.

Die Erfindung löst das Problem durch ein Monitorsystem nach Anspruch 1. Vorteilhaft daran ist, dass die zusätzliche Bewegungsmöglichkeit der Monitore selbst die Aufmerksamkeit des Betrachters auf besonders intensive Weise zu binden vermag. Außerdem hat sich herausgestellt, dass die Bewegungen, die auf dem Monitor selbst dargestellt werden, und die Bewegung des Monitors selber als unabhängige Bewegungen wahrgenommen werden, wobei die Bewegung des Monitors selbst die Aufmerksamkeit besonders stark bindet.

Im Rahmen der vorliegenden Beschreibung ist darunter, dass vier Monitore explizit genannt werden, insbesondere zu verstehen, dass zumindest vier Monitore vorhanden sind. Insbesondere sind 8, 9, 10, 11, 12 oder mehr Monitore vorhanden.

Unter einem Monitor wird insbesondere eine Vorrichtung verstanden, die einen Bildschirm aufweist, der selbsttätig Bilder oder Filme aktiv, also durch Emissionen selbst erzeugtes Licht, darstellen kann. Insbesondere ist eine Leinwand kein Monitor. Unter der Basis wird insbesondere ein Bauteil verstanden, das fest mit einem Gebäude oder dem Boden verbindbar ausgebildet ist. Zwar ist es möglich, nicht aber notwendig, dass die Basis selber bewegbar ausgebildet ist. Insbesondere ruht die Basis beim Betrieb des Monitorsystems.

Zumindest ein Monitor ist mittels eines Scherenantriebs an der Basis befestigt. Besonders günstig ist es, wenn zwei, drei oder mehrere Monitore, insbesondere die Mehrzahl der Monitore, mittels eines Scherenantriebs an der Basis befestigt sind. Besonders bevorzugt sind alle Monitore mittels eines Scherenantriebs an der Basis befestigt.

Unter einem Scherenantrieb wird insbesondere ein Antrieb verstanden, der zumindest zwei, vorzugsweise zumindest vier oder mehr, zickzackförmig miteinander verbundene Scherensegmente aufweist. Vorteilhaft an einem Scherenantrieb ist, dass ein vergleichsweise geringer Hub eines Motors des Scherenantriebs, beispielsweise eines Hydraulikzylinders, Pneumatikzylinders oder eines Kugelgewindetriebs, ausreicht, um einen großen Hub zu bewirken. Vorteilhaft an einem Scherenantrieb ist zudem ein besonders großer Hubquotient, wobei der Hubquotient berechnet wird aus der Länge in einer ausgefahrenen Position als Zähler und eine Länge in einer eingefahrenen Position als Nenner. Das erlaubt besonders eindrucksvolle Bewegungen der Monitore.

Vorzugsweise ist der Scherenantrieb mit einem proximalen Ende an der Basis befestigt. Der Scherenantrieb besitzt ein distales Ende, an dem der jeweilige Monitor befestigt ist, wobei der Monitor um eine vertikale Monitor-Schwenkachse schwenkbar an dem distalen Ende befestigt ist. Dies Merkmal gilt vorzugsweise zumindest für die Mehrzahl, insbesondere für alle, Scherenantriebe und die entsprechend zugeordneten Monitore.

Besonders günstig ist es, wenn der Monitor um zumindest ± 45° um die Monitor-Schwenkachse gierbar befestigt ist. In diesem Fall ist ein Winkel zwischen den beiden extremen Positionen bezüglich der Gierbewegung zumindest 90°. Es hat sich herausgestellt, dass auf diese Weise besonders attraktiv erscheinende Bewegungsmuster verwirklichbar sind.

Der Scherenantrieb ist um eine horizontale Scherenantriebs-Schwenkachse schwenkbar an der Basis befestigt. Die Monitore können in ihrem seitlichen Abstand voneinander variiert werden.

Das Monitorsystem besitzt eine erste Monitor-Gruppe, die zumindest drei, insbesondere zumindest oder genau vier, Monitore aufweist, die kollektiv und drehbar an der Basis befestigt sind, wobei das Monitorsystem eine zweite Monitor-Gruppe aufweist, die zumindest drei, insbesondere zumindest oder genau vier, Monitore aufweist, die kollektiv drehbar an der Basis befestigt sind. Besonders bevorzugt besitzt das Monitorsystem eine dritte Monitor-Gruppe, die drei, insbesondere zumindest oder genau vier, Monitore aufweist, die kollektiv drehbar in der Basis befestigt sind. Eine derartige kollektive Drehbarkeit ermöglicht ein mit bisherigen Monitor-Systemen nicht mögliches Bewegungsbild der Monitore, was aufmerksamkeitssteigernd wirkt.

Das Monitor-System weist ein erstes Segment, das um eine Vertikalachse automatisch drehbar an der Basis befestigt ist und an dem die Monitore der ersten Monitor-Gruppe befestigt sind, und ein zweites Segment, das um die gleiche Vertikalachse automatisch drehbar an der Basis befestigt ist, an dem die Monitore an der zweiten Monitor-Gruppe befestigt sind und das oberhalb des ersten Segments angeordnet ist, auf. Besonders günstig ist es, wenn das Monitorsystem ein drittes Segment aufweist, das um die Vertikalachse drehbar an der Basis befestigt ist, an dem die Monitore der dritten Monitor-Gruppe befestigt sind und das oberhalb des zweiten Segmentes angeordnet ist. In anderen Worten sind die Monitore mittels des jeweiligen Segmentes an der Basis befestigt.

Unter einem Segment wird insbesondere ein Bauteil verstanden, das die Basis ringförmig umgibt. Ein derartiger Aufbau ist besonders stabil und robust. Es ist aber auch möglich, dass beispielsweise die Segmente C-förmig ausgebildet sind oder eine andere Form haben.

Das Monitorsystem besitzt vorzugsweise eine elektrische Steuerung, die mit allen Antrieben des Monitorsystems zum Antreiben und/oder Ansteuern verbunden ist. Unter dem Ansteuern wird insbesondere auch ein Regeln im regelungstechnischen Sinne verstanden. Günstig ist es, wenn die Steuerung eingerichtet ist zum automatischen Durchführen eines Verfahrens mit den Schritten (i) Bewegen der Monitore aus einer ersten Konfiguration in eine zweite Konfiguration. Alternativ oder zusätzlich ist die Steuerung ausgerichtet zum automatischen Drehen zumindest eines Segments, insbesondere aller Segmente, um eine Segment-Drehachse.

Vorzugsweise sind in der ersten Konfiguration in zumindest einer Monitor-Gruppe ein erster Monitor und ein zweiter Monitor Seit-an-Seit angeordnet, wobei die Monitore in eine erste Richtung weisen, wobei ein dritter Monitor und ein vierter Monitor Seit-an-Seit angeordnet sind und in eine zweite Richtung weisen, die der ersten Richtung entgegengesetzt ist, wobei ein erster Scherenantrieb, mit dem der erste Monitor befestigt ist, und ein dritter Scherenantrieb, mit dem der dritte Monitor befestigt ist, sich entgegengesetzt der Richtung erstrecken und wobei ein zweiter Scherenantrieb, mittels dem der zweite Monitor befestigt ist, und ein vierter Scherenantrieb, mittels dem der vierte Monitor befestigt ist, sich ebenfalls in entgegengesetzter Richtung erstrecken. Auf diese Weise können Bilder in zwei entgegengesetzte Richtungen angezeigt werden.

Vorzugsweise sind die Scherenantriebe in eine eingefahrene Position und eine ausgefahrene Position bringbar, wobei die Scherenantriebe der entsprechenden Monitor-Gruppe der ersten Konfiguration höchstens 25% des Hubs von der eingefahrenen Position entfernt sind. Der Hub ist die Differenz zwischen der ausgefahrenen Position und der eingefahrenen Position.

Unter einer Anordnung Seit-an-Seit wird insbesondere verstanden, das die Monitore mit ihrer schmalen Seite horizontal nebeneinander auf einer Höhe bündig angeordnet sind, wobei ein Abstand zwischen zwei benachbarten Monitoren höchstens ein 1/10, vorzugsweise höchstens 1/20, ihrer Breite beträgt. Unter der entgegengesetzten Richtung wird insbesondere verstanden, dass ein Winkel zwischen den beiden Richtungen 180° ± 10° beträgt. In der eingefahrenen Position haben die Scherenantriebe ihre minimale Länge, in der ausgefahrenen Position haben die Scherenantriebe ihre maximale Länge.

Besonders günstig ist es, wenn die Erstreckungsrichtung der Scherenantriebe mit der Horizontalen einen Winkel von höchstens 10° bildet, wenn die Monitore in der ersten Konfiguration sind.

Beispielsweise ist es möglich, dass die Monitore einer Monitor-Gruppe in der zweiten Konfiguration in vier Richtungen weisen, die zueinander in einem rechten Winkel angeordnet sind. Unter einem rechten Winkel wird insbesondere ein Winkel von 90° ± 5° verstanden. Weitere Konfigurationen sind in der Beschreibung zu den Figuren dargelegt.

Die Scherenantriebe sind vorzugsweise mit jeweils einem Fußabschnitt an der Basis, insbesondere an dem Segment befestigt. Vorzugsweise sind die Fußabschnitte von Scherenantrieben von Monitoren einer Monitor-Gruppe auf gleicher Höhe angeordnet.

Die Scherenantriebe, die am zweiten Segment befestigt sind, und, sofern vorhanden, die Scherenantriebe, die am dritten Segment befestigt sind, sind so ausgebildet, dass eine Bewegung der Monitore nach unten ausgeschlossen ist. Das vermindert die Kollisionsgefahr der Monitore untereinander. Günstig ist es aus dem gleichen Grund, wenn die Scherenantriebe, die am ersten Segment befestigt sind, so ausgebildet sind, dass eine Bewegung der Monitore nach oben ausgeschlossen ist.

Vorzugsweise haben die Monitore der zweiten Monitor-Gruppe von den Monitoren der dritten Monitor-Gruppe den geringstmöglichen horizontalen Abstand, wenn die Scherenantriebe sich in horizontaler Richtung erstrecken. Vorteilhaft daran ist, dass auch das die Kollisionsgefahr vermindert.

Vorzugsweise haben die Scherenantriebe in der eingefahrenen Position eine Baulänge, wobei das Monitorsystem zumindest einen Schwenkantrieb zum Gieren des zumindest einen Monitors um die Monitor-Schwenkachse aufweist und wobei die Baulänge und ein Winkelbereich des zumindest einen Schwenkantriebs so gewählt sind, dass ein Kontakt zwei benachbarter Monitore einer Monitor-Gruppe unabhängig von einer Gierwinkelstellung ausgeschlossen ist.

Vorzugsweise sind die Monitore bezüglich einer Schwenkbewegung um eine horizontale Schwenkachse drehstarr an der Basis befestigt.

Um die Kollisionswahrscheinlichkeit zweier Monitore weiterhin zu verringern sind die Monitore vorzugsweise bezüglich einer Drehbewegung um eine horizontale Rollachse drehstarr an der Basis befestigt. In anderen Worten können die Monitore keine Drehbewegung um die Rollachse ausführen.

Vorzugsweise ist die Steuerung so ausgebildet, dass eine simultane Nickbewegung der Scherenantriebe und einer Gier-Bewegung der Monitore ausgeschlossen ist.

Vorzugsweise ist die elektrische Steuerung ausgebildet zum automatischen Ansteuern der Scherenantriebe, so dass ein Schwerpunkt der Monitore der ersten Monitor-Gruppe, vorzugsweise aller Monitor-Gruppen, stets innerhalb der Basis liegt. So werden Kippmomente auf die Basis vermieden.

Erfindungsgemäß ist zudem ein Gebäude mit einem erfindungsgemäßen Monitorsystem, wobei die Basis an einer Decke des Gebäudes, an einem Mast oder an einem Fuß, der auf dem Boden steht, befestigt ist. Alternativ ist die Basis an einem Gestell befestigt, das beispielsweise temporär aufgestellt oder aufgehängt wird.

Im Folgenden wird die Erfindung anhand der beigefügten Zeichnungen näher erläutert. Dabei zeigt
- Figur 1: eine erfindungsgemäße Prinzipskizze eines Monitorsystem in einer Seitenansicht,
- Figur 2: eine schematische Ansicht des Monitorsystems gemäß Figur 1,
- Figur 3: eine schematische Ansicht von oben auf einen Monitor des Monitorsystems gemäß Figur 1,
- Figur 4: eine perspektivische Ansicht des Monitorsystems,
- Figur 5a: eine Prinzipskizze eines Scherenantriebs des Monitorsystems,
- Figur 5b: eine Detailzeichnung des Scherenantriebs gemäß Figur 4a und die
- Figuren 6a, 6b, 6c und 6d: zeigen das Monitorsystem in verschiedenen Konfigurationen.

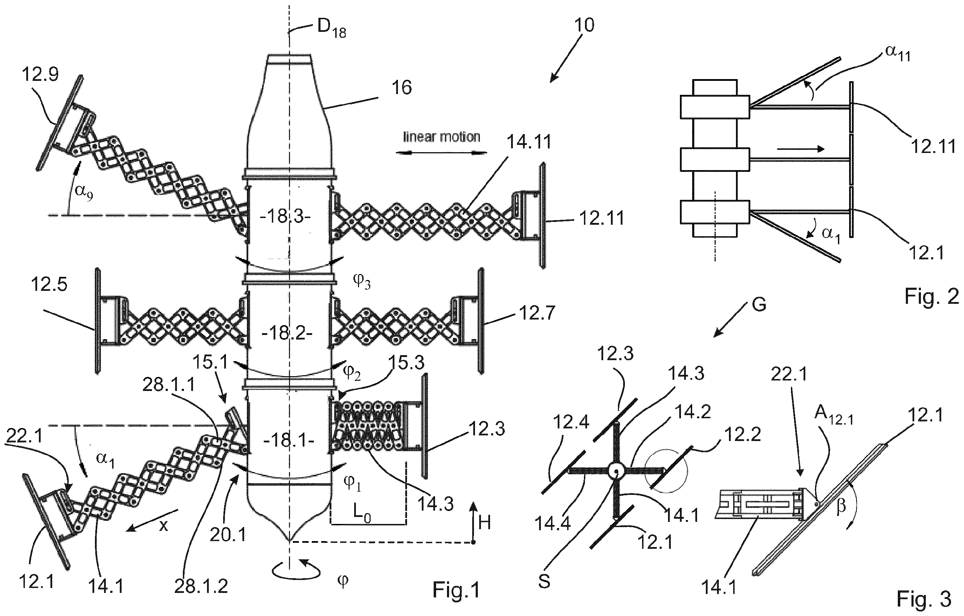

Figur 1 zeigt ein erfindungsgemäßes Monitorsystem 10, das eine Mehrzahl an Monitoren 12.i (i = 1, 2,..., N) aufweist. Die Zahl N der Monitore kann beispielsweise 16 betragen. In Figur 1 sind der Übersichtlichkeit halber die Monitore 12.2, 12.6 und 12.10 nicht eingezeichnet. Die Monitore 12.i sind in je zumindest zwei Freiheitsgraden, vorliegend um drei Freiheitsgradenmotorisch bewegbar an einer Basis 16 befestigt. Beispielsweise ist der Monitor 12.1 um einen Nickwinkel α₁ und einen Drehwinkel ϕ₁ drehbar sowie in eine Längenrichtung x bewegbar.

Die Monitore, insbesondere der Monitor 12.1, sind mit jeweils einem Scherenantrieb 14.i an einer Basis 16 befestigt. Die Basis 16 ist im vorliegenden Fall abschnittsweise zylinderförmig.

In der in Figur 1 gezeigten Ausführungsform sind die Schwenkantriebe 14 mittels jeweils eines Segmentes 18.1, 18.2 bzw. 18.3 an der Basis 16 befestigt. Die Segmente 18.j (j = 1, 2, 3) sind mittels eines nicht eingezeichneten Motors um die Basis 16 unabhängig voneinander drehbar. So ist das Segment 18 um einen Drehwinkel ϕ₁ um eine Vertikalachse D₁₈ um die Basis 16 drehbar, wobei dieser Drehwinkel ϕ₁ einem Drehwinkel ϕ₂ des zweiten Segments 18.2 entsprechen kann, dies ist aber nicht notwendig.

Der Scherenantrieb besitzt ein proximales Ende 20.i, mit dem er am jeweiligen Segment 18 befestigt ist, sowie ein distales Ende 22.i, an dem der jeweilige Monitor 12.i befestigt ist. Der Bereich des proximalen Endes 20.i kann auch als Fußabschnitt bezeichnet werden. Der Scherenantrieb des Monitors 12.3 ist in seiner eingefahrenen Position gezeigt, in der er eine Baulänge L₀ hat.

Figur 3 zeigt eine Ansicht von oben auf das Monitorsystem 10. Im rechten Teilbild ist zu erkennen, dass die Monitore 12.i, beispielsweise der Monitor 12.1, um einen Gierwinkel β um eine vertikale Monitor-Schwenkachse A_{12.1} mittels eines nicht eingezeichneten Giermotors schwenkbar sind.

Figur 3 zeigt zudem, dass die Monitore 12.1, 12.2, 12.3 sowie 12.4 eine erste Gruppe G₁ bilden, die an einem ersten Segment 18.1 befestigt sind. Flächenweise bilden die Monitore 12.5, 12.6, 12.7 und 12.8, die am zweiten Segment 18.2 befestigt sind, eine zweite Gruppe G₂ und die Monitore 12.9., 12.10, 12.11 und 12.12, die am dritten Segment 18.3 befestigt sind, eine dritte Gruppe G₃. Durch Drehen des jeweiligen Segmentes 18.j ist jede der Gruppen Gⱼ kollektiv an der Basis um eine horizontale Drehachse D₁₈ drehbar befestigt. Alle Monitore einer Gruppe sind auf der gleichen Höhe H angeordnet.

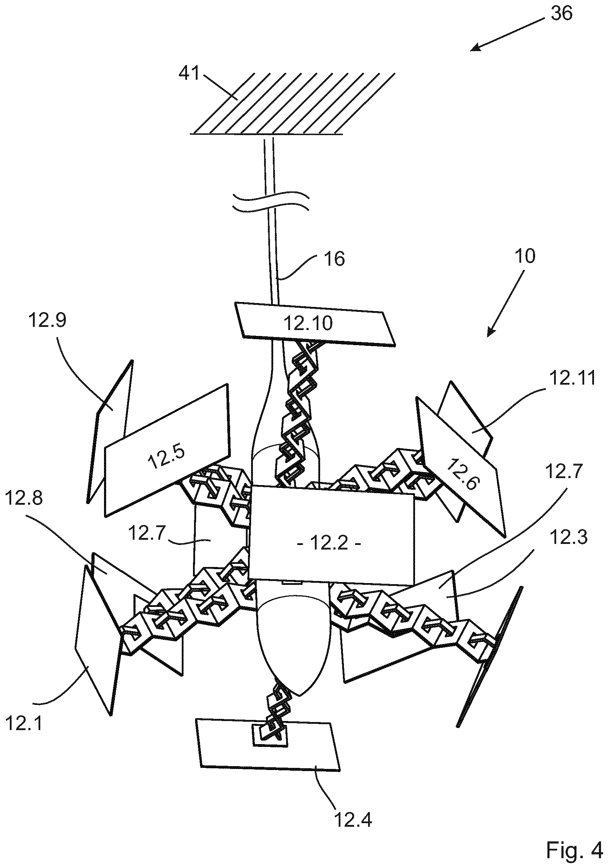

Figur 4 zeigt eine perspektivische Ansicht des Monitorsystems 10 gemäß der Figuren 1 bis 3.

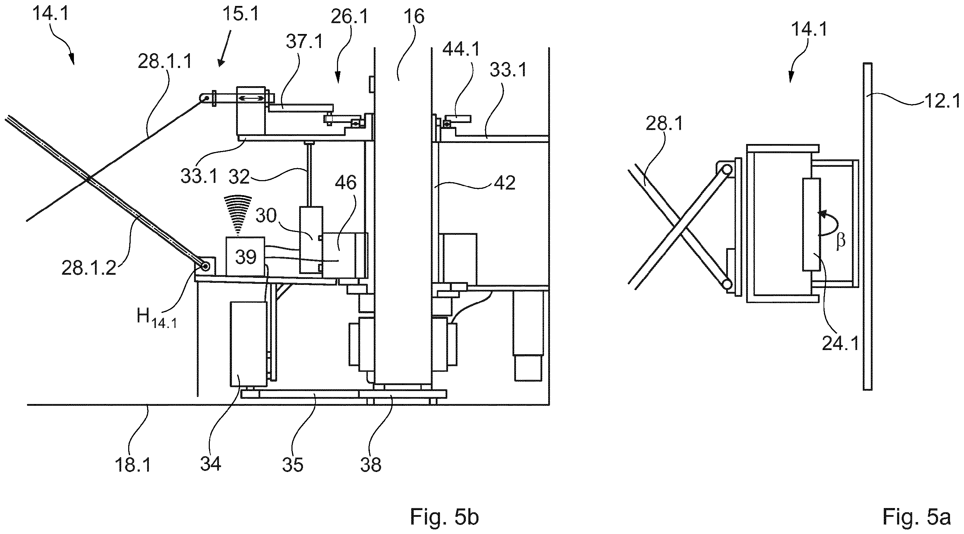

Figur 5a zeigt in einer Teilansicht die Befestigung des Monitors 12.1 am Scherenantrieb 14.1. Alle Monitore sind auf gleiche Weise am jeweiligen Scherenantrieb befestigt. Es ist zu erkennen, dass ein Giermotor 24.1 vorhanden ist, um den Monitor 12.1 um die Monitorschwenkachse A₁₂ zu schwenken.

Figur 5b zeigt eine schematische Ansicht des Scherenantriebs 14.1. Figur 1 zeigt, dass jeder Scherenantrieb 14i, beispielsweise der Scherenantrieb 14.1, eine Mehrzahl an Scherensegmenten 28.1.1, 28.1.2, ... aufweist, die miteinander so verbunden sind, dass sie relativ zueinander schwenken können. Ein Elektromotor 30 bewegt über eine Schubstange 32 und eine Scheibe 33.1 ein Scherensegment, im vorliegenden Fall das Scherensegment 28.1.1. Wird die Schubstange 32 ausgefahren, so bewegt sich daher der Monitor 12.1 (vergleiche Figur 1) auf die Basis 16 zu.

An der Scheibe 33.1 sind alle Fußabschnitte 15.1 bis 15.4 der Scherenantriebe 14.1 bis 14.4 des Segments 18.1 befestigt. Damit wird eine synchrone Längenänderung aller Scherenantriebe 14.i des Segments 18.1 und damit einer Ebene mit einem einzigen Antrieb erreicht. Dieser Aufbau bedingt eine konstruktive Sicherheit. Alle Scherenantriebe 14.i des ersten Segments 18.1 haben aufgrund der mechanischen Kopplung stets die gleiche Länge. Sollte der Motor 30 ausfallen, kann dennoch keine Unwucht entstehen. Die Scherenantriebe der Segmente 18.2 und 18.3 sind ebenfalls mittels genau eines Elektromotors ein- und ausfahrbar.

Ein zweiter Elektromotor 34, kämmt mit einem Zahnkranz 35, der an der Basis 16 befestigt ist. Wird der zweite Elektromotor 34 betätigt, so dreht sich daher das erste Segment 18.1.

Um alle Scherenantriebe 14.1 bis 14.4 des ersten Segments 18.1 um jeweils den gleichen Nickwinkel α zu schwenken, ist jeder Fußabschnitt 15.i eines Scherenantriebs 14.i an je einem zugeordneten Schieber 37.1 befestigt. Dreht ein dritter Elektromotor 46 eine Hülse 42 mit Außenverzahnung, so dreht sich eine zweite Scheibe 44.1 relativ zur ersten Scheibe 33.1. Der Schieber 37.1 greift mit einem Ende wie ein Kulissenstein in eine Ausnehmung in der zweiten Scheibe 44 ein. Das Ende des Schiebers wird durch die Ausnehmung radial auswärts bewegt, sodass der Monitor 12.1 (vgl. Figur 1) um eine Horizontalachse H_{14.1} nach unten schwenkt. Da alle Fußabschnitte 15.i (i=1, ... , 4) der Scherenantriebe 14.i des ersten Segments 18.1 auf die gleiche Weise befestigt sind, schwenken alle Monitore 12.1 des ersten Segments 18.1 um den gleichen Nickwinkel α nach unten.

Die Scherenantriebe 14.5 bis 14.8 des zweiten Segments 18.2 sind nicht zu einer Nickbewegung in der Lage. Die Scherenantriebe 14.9 bis 14.12 des dritten Segments 18.3 besitzen einen Nickantrieb, der nur eine Bewegung nach oben ermöglicht. Dieser ist beispielsweise symmetrisch zum oben beschriebenen Antrieb für die Scherenantriebe 14.1 bis 14.4 ausgebildet.

In Figur 5b ist schematisch eine elektrische Steuerung 39 eingezeichnet, die mit allen Motoren des Segments 18.1 zum Ansteuern verbunden ist. Die Steuerung 39 besitzt einen digitalen Speicher, in dem ein Bewegungsprogramm - und gegebenenfalls auch Filme oder Bilder zum Darstellen auf den Monitoren 12.i - gespeichert ist. Vorzugsweise ist die Steuerung 39 mit weiteren Steuerungen verbunden, beispielsweise per Funkverbindung. Es ist auch möglich, dass eine zentrale elektrische Steuerung vorhanden ist, die alle Motoren aller Segmente und die Monitore ansteuert.

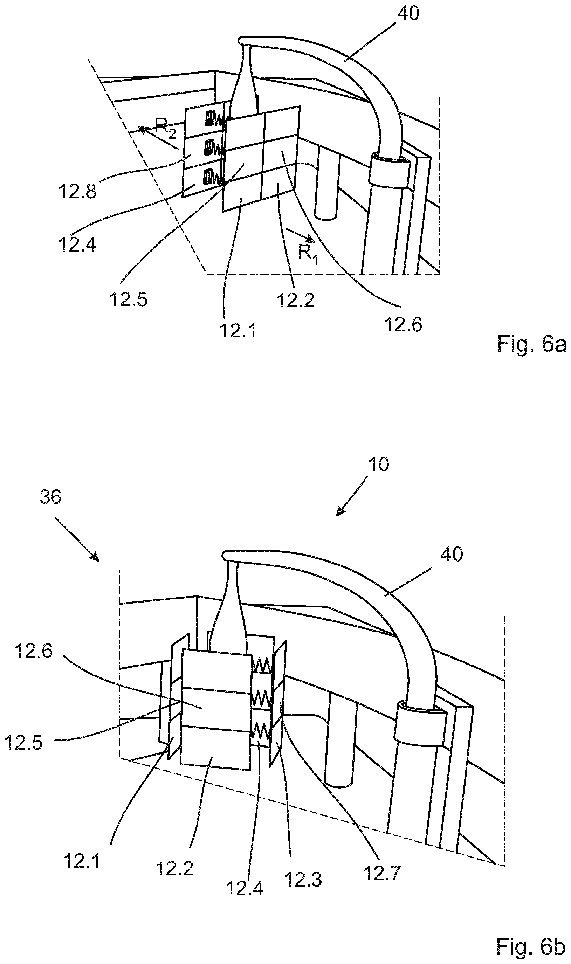

Figur 6a zeigt die Monitore in einer ersten Konfiguration. Es ist zu erkennen, dass jeweils 6 Monitore eine 2x3-Matrix bilden, wobei die Monitore 12.1 und 12.2 Seit-an-Seit angeordnet sind und in erste Richtung (R1) weisen. Die Monitore 12.3 und 12.4 weisen in eine zweite Richtung, die der ersten Richtung entgegengesetzt ist und sind ebenfalls Seit-an-Seit angeordnet. Wie Figur 3 im linken Teilbild zu entnehmen ist, erstrecken sich die Scherenantriebe 14.1 und 14.3 jeweils in entgegengesetzte Richtungen. Das gleiche gilt für die Scherenantriebe 14.2 und 14.4.

Das Monitorsystem 10 ist in einem Gebäude 36 angeordnet und hängt an einem Masten 40. Alternativ kann das Monitorsystem 10 - wie in Figur 4 gezeigt - an einer Decke 41 des Gebäudes hängen.

Figur 6b zeigt eine zweite Konfiguration, bei der jeweils drei Monitore übereinander angeordnet sind und gemeinsam in eine Richtung weisen. Die so entstehenden vier Richtungen stehen senkrecht aufeinander.

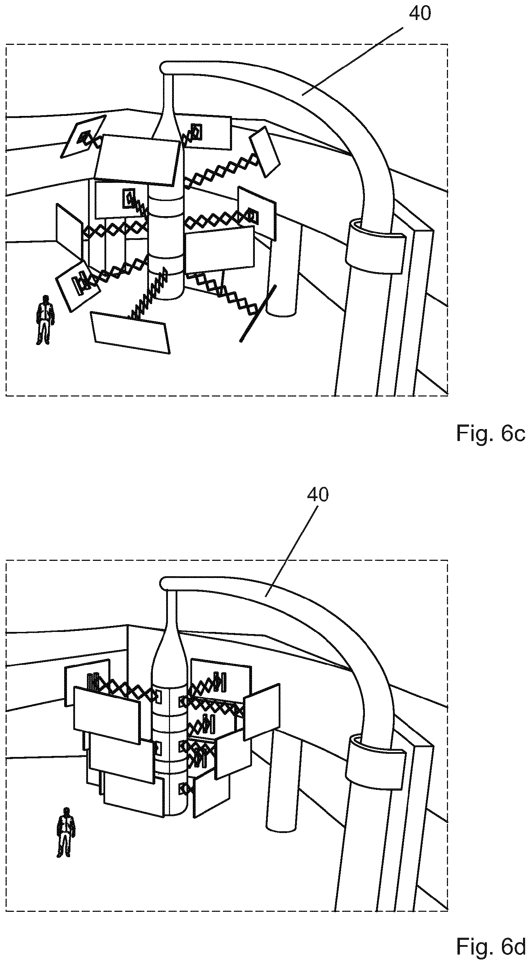

Figur 6c zeigt eine weitere Anordnung, bei der die Scherenantriebe maximal ausgefahren sind und alle Monitore in unterschiedliche Richtungen zeigen.

Figur 6d zeigt eine weitere Konfiguration, bei der die Monitore jeweils weiter ausgefahren sind, je höher sie angeordnet sind.

**Bezugszeichenliste**

| | | | |
|---|---|---|---|
| 10 | Monitorsystem | 42 | Hülse |
| 12 | Monitor | 44 | zweite Scheibe |
| 14 | Scherenantrieb | 46 | dritter Elektromotor |
| 15 | Fußabschnitt | | |
| 16 | Basis | | |
| 18 | Segment | | |
| | | α | Nickwinkel |
| 20 | proximales Ende | β | Gierwinkel |
| 22 | distales Ende | ϕ | Drehwinkel |
| 24 | Giermotor | | |
| 26 | Schwenkantrieb | A₁₂ | Monitor-Schwenkachse |
| 28 | Scherensegment | D₁₈ | Segment-Drehachse |
| 30 | Elektromotor | G | Gruppe |
| 32 | Schubstange | H | Höhe |
| 33 | Scheibe | H_{14.i} | Horizontalachse |
| 34 | zweiter Elektromotor | D₁₈ | Vertikalachse |
| 35 | Zahnkranz | | |
| 36 | Gebäude | i, j | Laufindex |
| 37 | Schieber | L₀ | Baulänge |
| 39 | elektrische Steuerung | N | Zahl der Monitore |
| | | R | Richtung |
| 40 | Mast | S | Schwerpunkt |
| 41 | Decke | x | Längsrichtung |

## Patentansprüche

1. Monitorsystem (10) mit
(a) einem ersten Monitor (12.1),
(b) einem zweiten Monitor (12.2),
(c) einem dritten Monitor (12.3),
(d) zumindest einem vierten Monitor (12.4) und
(e) einer Basis (16), wobei
(f) die Monitore (12.i) in je zumindest zwei Freiheitsgraden motorisch bewegbar an der Basis (16) befestigt sind,
**dadurch gekennzeichnet, dass**
(g) zumindest ein Monitor (12.1) mittels eines Scherenantriebs (14.1) an der Basis (16) befestigt ist und
(h) der Scherenantrieb (14) um eine horizontale Schwenkantrieb-Schwenkachse (H_{14.1}) schwenkbar an der Basis (16) befestigt ist, dass das Monitor-system (10) aufweist:
(i) eine erste Monitor-Gruppe (G1), die zumindest drei Monitore (12.1, 12.2, 12.3, 12.4) aufweist, die kollektiv drehbar an der Basis (16) befestigt sind,
(j) zumindest eine zweite Monitor-Gruppe (G2), die zumindest drei Monitore (12.5, 12.6, 12.7, 12.8) aufweist, die kollektiv drehbar an der Basis (16) befestigt sind,
(k) ein erstes Segment (18.1),
- das um eine Vertikalachse (D₁₈) automatisch drehbar an der Basis (16) befestigt ist und
- an dem die Monitore (12) der ersten Monitor-Gruppe (G1) befestigt sind, und
(I) zumindest ein zweites Segment (18.2),
- das um die Vertikalachse (D₁₈) automatisch drehbar an der Basis (16) befestigt ist,
- an dem die Monitore (12) der zweiten Monitor-Gruppe (G2) befestigt sind und
- das oberhalb des ersten Segments (18.1) angeordnet ist und dass
(m) zumindest die Scherenantriebe (14.i), die am zweiten Segment (18.2) befestigt sind, so ausgebildet sind, dass eine Bewegung der Monitore (12) nach unten unterbunden ist.

2. Monitorsystem (10) nach Anspruch 1, **dadurch gekennzeichnet, dass** der Scherenantrieb (14.1)
- mit einem proximalen Ende (20.1) an der Basis (16) befestigt ist,
- ein distales Ende (22.1) aufweist, an dem der Monitor (12.1) befestigt ist, und dass
- der Monitor (12.1) um eine vertikale Monitor-Schwenkachse (A_{12.1}) schwenkbar an dem distalen Ende (22.1) befestigt ist.

3. Monitorsystem (10) nach einem der vorstehenden Ansprüche, **gekennzeichnet durch** eine elektrische Steuerung (39), die eingerichtet ist zum automatischen Durchführen eines Verfahrens mit den Schritten:
(i) Bewegen der Monitore (12) aus einer ersten Konfiguration in eine zweite Konfiguration und/oder
(ii) Drehen zumindest eines Segments (18) um die Vertikalachse (D₁₈).

4. Monitorsystem (10) nach einem der vorstehenden Ansprüche, **dadurch gekennzeichnet, dass**
(a) in der ersten Konfiguration in zumindest einer Monitor-Gruppe (G₁, G₂, G₃)
- ein erster Monitor (12.1) und ein zweiter Monitor (12.2) Seit-an-Seit angeordnet sind, wobei die Monitore (12) in eine erste Richtung (R1) weisen,
- ein dritter Monitor (12.3) und ein vierter Monitor (12.4) Seit-an-Seit angeordnet sind, wobei die Monitore (12) in eine zweite Richtung (R2) weisen, die der ersten Richtung (R1) entgegengesetzt ist,
- ein erster Scherenantrieb (14), mittels dem der erste Monitor (12.1) befestigt ist, und ein dritter Scherenantrieb (14), mittels dem der dritte Monitor (12.3) befestigt ist, sich in entgegengesetzte Richtungen erstrecken, und
- ein zweiter Scherenantrieb (14), mittels dem der zweite Monitor (12.2) befestigt ist, und ein vierter Scherenantrieb (14), mittels dem der vierte Monitor (12.4) befestigt ist, sich in entgegengesetzte Richtungen erstrecken und
(b) die Scherenantriebe (14.i)
- in eine eingefahrene Position und eine ausgefahrene Position bringbar sind und
- sich in der ersten Konfiguration in der eingefahrenen Position befinden.

5. Monitorsystem (10) nach einem der vorstehenden Ansprüche, **dadurch gekennzeichnet, dass**
die Monitore (12.i) der zweiten Monitor-Gruppe (G₂) von den Monitoren (12) einer dritten Monitor-Gruppe (G₃) den geringstmöglichen horizontalen Abstand haben, wenn die Scherenantriebe (14) sich in horizontaler Richtung erstrecken.

6. Monitorsystem (10) nach Anspruch 2, **dadurch gekennzeichnet, dass**
- die Scherenantriebe (14.i) in der eingefahrenen Position eine Baulänge (L₀) haben,
- das Monitorsystem (10) zumindest einen Schwenkantrieb (26) zum Gieren des zumindest eines Monitors (12) um die Monitor-Schwenkachse (A₁₂) aufweist und
- die Baulänge und ein Winkelbereich des zumindest einen Schwenkantriebs (26) so gewählt sind, dass ein Kontakt zweier Monitore (12) einer Monitor-Gruppe unabhängig von einer Gier-Stellung bezüglich der Monitor-Schwenkachse (A₁₂) ausgeschlossen ist.

7. Monitorsystem (10) nach einem der vorstehenden Ansprüche, **dadurch gekennzeichnet, dass**
die Monitore (12) bezüglich einer Drehbewegung um eine horizontale Rollachse drehstarr an der Basis (16) befestigt sind.

8. Gebäude mit einem Monitorsystem (10) nach einem der vorstehenden Ansprüche, **dadurch gekennzeichnet, dass** die Basis (16) an einer Decke (41) des Gebäudes oder einem Masten (40) hängt.

## Claims

1. A monitor system (10) with
(a) a first monitor (12.1),
(b) a second monitor (12.2),
(c) a third monitor (12.3),
(d) at least a fourth monitor (12.4) and
(e) a base (16), wherein
(f) the monitors (12.i) are fixed to the base (16) such that they can each be moved by way of a motor in at least two degrees of freedom,
**characterised by the fact that**
(g) at least one monitor (12.1) is fixed to the base (16) by means of a lazy tong drive (14.1), and
(h) the lazy tong drive (14) is fixed to the base (16) such that it can be swivelled about a horizontal swivel drive-swivel axis (H_{14.1}); that the monitor system (10) comprises:
(i) a first monitor group (G1) with at least three monitors (12.1, 12.2, 12.3, 12.4) that are fixed to the base (16) such that they can be collectively rotated,
(j) at least a second monitor group (G2) with at least three monitors (12.5, 12.6, 12.7, 12.8) that are fixed to the base (16) such that they can be collectively rotated,
(k) a first segment (18.1),
- that is fixed to the base (16) such that it can be automatically rotated about a vertical axis (D₁₈) and
- to which the monitors (12) in the first monitor group (G1) are fixed, and
(I) at least a second segment (18.2),
- that is fixed to the base (16) such that it can be automatically rotated about the vertical axis (D₁₈),
- to which the monitors (12) in the second monitor group (G2) are fixed and
- that is arranged above the first segment (18.1), and that
(m) at least the lazy tong drives (14.i), which are fixed to the second segment (18.2), are designed such that a downward movement of the monitors (12) is prevented.

2. A monitor system (10) according to claim 1, **characterised by** the fact that the lazy tong drive (14.1)
- is fixed to the base (16) at a proximal end (20.1),
- comprises a distal end (22.1) to which the monitor (12.1) is fixed, and that
- the monitor (12.1) is fixed to the distal end (22.1) such that it can be pivoted about a monitor pivot axis (A₁₂₁).

3. The monitor system (10) according to one of the above claims, **characterised by** an electric control unit (39) that is designed to automatically carry out a method featuring the steps:
(i) moving the monitors (12) from a first configuration into a second configuration and/or
(ii) rotating at least one segment (18) about the vertical axis (D₁₈).

4. The monitor system (10) according to one of the above claims, **characterised by** the fact that,
(a) when in the first configuration, in at least one monitor group (G1, G2, G3)
- a first monitor (12.1) and a second monitor (12.2) are arranged side-by-side, wherein the monitors (12) point in a first direction (R1),
- a third monitor (12.3) and a fourth monitor (12.4) are arranged side-by-side, wherein the monitors (12) point in a second direction (R2) that is opposite to the first direction (R1),
- a first lazy tong drive (14), by means of which the first monitor (12.1) is fixed, and a third lazy tong drive (14) by means of which the third monitor (12.3) is fixed, extend in opposite directions, and
- a second lazy tong drive (14), by means of which the second monitor (12.2) is fixed, and a fourth lazy tong drive (14) by means of which the fourth monitor (12.4) is fixed, extend in opposite directions, and
(b) the lazy tong drives (14.i)
- can be moved into a retracted position and an extended position, and
- are in the retracted position when in the first configuration.

5. The monitor system (10) according to one of the above claims, **characterised by** the fact that,
the monitors (12.i) in the second monitor group (G₂) are at the smallest possible horizontal distance from the monitors (12) in the third monitor group (G₃) when the lazy tong drives (14) extend in the horizontal direction.

6. The monitor system (10) according to claim 2, **characterised by** the fact that
- when in the retracted position, the lazy tong drives (14.i) have an overall length (L₀),
- the monitor system (10) comprises at least swivel drive (26) for yawing the at least one monitor (12) about the monitor pivot axis (A₁₂), and
- the overall length and an angle range of the at least one swivel drive (26) are selected in such a way that any contact between two monitors (12) in a monitor group, regardless of a yaw position relative to the monitor pivot axis (A₁₂), is ruled out.

7. The monitor system (10) according to one of the above claims, **characterised by** the fact that,
the monitors (12) are rigidly fixed to the base (16) in terms of a rotational movement about a horizontal roll axis.

8. A construction with a monitor system (10) according one of the above claims, **characterised by** the fact that the base (16) hangs on a ceiling (41) of the construction or on a mast (40).

## Revendications

1. Système de surveillance (10) comportant
(a) un premier écran (12.1),
(b) un second écran (12.2),
(c) un troisième écran (12.3),
(d) au moins un quatrième écran (12.4) et
(e) une base (16),
dans lequel
(f) les écrans (12.i) sont chacun fixés à la base (16) de façon mobile par voie motrice au moins dans deux degrés de liberté,
**caractérisé en ce que**
(g) au moins un écran (12.1) est fixé à la base (16) au moyen d'un entraînement en ciseaux (14.1), et
(h) l'entraînement en ciseaux (14) est fixé à la base (16) de façon mobile en basculement autour d'un axe de basculement (H_{14.1}), et
**en ce que** le système de surveillance (10) comprend
(i) un premier groupe d'écrans (G1) qui comprend au moins trois écrans (12.1, 12.2, 12.3, 12.4) fixés à la base (16) de façon mobile en rotation collectivement,
(j) au moins un second groupe d'écrans (G2) qui comprend au moins trois écrans (12.5, 12.6, 12.7, 12.8) fixés à la base (16) de façon mobile en rotation collectivement,
(k) un premier segment (18.1)
- qui est fixé à la base (16) de façon mobile en rotation automatiquement autour d'un axe vertical (D₁₈) et
- auquel sont fixés les écrans (12) du premier groupe d'écrans (G1), et (l) au moins un second segment (18.2)
- qui est fixé à la base (16) de façon mobile en rotation automatiquement autour de l'axe vertical (D₁₈) et
- auquel sont fixés les écrans (12) du second groupe d'écrans (G2), et
- qui est disposé au-dessus du premier segment (18.1),
et **en ce que**
(m) au moins les entraînements en ciseaux (14.i) fixés au second segment (18.2) sont réalisés de manière à interdire un mouvement des écrans (12) vers le bas.

2. Système de surveillance (10) selon la revendication 1,
**caractérisé en ce que**
l'entraînement en ciseaux (14.1)
- est fixé à la base (16) par une extrémité proximale (20.1),
- comprend une extrémité distale (22.1) à laquelle est fixé l'écran (12.1), et **en ce que**
- l'écran (12.1) est fixé à l'extrémité distale (22.1) de façon mobile en basculement autour d'un axe de basculement vertical (A_{12.1}) de l'écran.

3. Système de surveillance (10) selon l'une des revendications précédentes,
**caractérisé par** une commande électrique (39) qui est conçue pour la mise en œuvre automatique d'un procédé comprenant les étapes consistant à :
(i) déplacer les écrans (12) depuis une première configuration jusque dans une seconde configuration et/ou
(ii) faire tourner au moins un segment (18) autour de l'axe vertical (D₁₈).

4. Système de surveillance (10) selon l'une des revendications précédentes,
**caractérisé en ce que**
(a) dans la première configuration, dans au moins un groupe d'écrans (G₁, G2, G3),
- un premier écran (12.1) et un second écran (12.2) sont disposés côte à côte, les écrans (12) étant dirigés dans une première direction (R1),
- un troisième écran (12.3) et un quatrième écran (12.4) sont disposés côte à côte, les écrans (12) étant dirigés dans une seconde direction (R2) opposée à la première direction (R1),
- un premier entraînement en ciseaux (14) par lequel est fixé le premier écran (12.1) et un troisième entraînement en ciseaux (14) par lequel est fixé le troisième écran (12.3) s'étendent dans des directions opposées, et
- un second entraînement en ciseaux (14) par lequel est fixé le second écran (12.2) et un quatrième entraînement en ciseaux (14) par lequel est fixé le quatrième écran (12.4) s'étendent dans des directions opposées, et
(b) les entraînements en ciseaux (14.i)
- peuvent être amenés dans une position rétractée et dans une position déployée et
- se trouvent dans la position rétractée dans la première configuration.

5. Système de surveillance (10) selon l'une des revendications précédentes,
**caractérisé en ce que**
les écrans (12.i) du second groupe d'écrans (G₂) présentent la plus petite distance horizontale possible depuis les écrans (12) d'un troisième groupe d'écrans (G₃) lorsque les entraînements en ciseaux (14) s'étendent en direction horizontale.

6. Système de surveillance (10) selon la revendication 2,
**caractérisé en ce que**
- dans la position rétractée, les entraînements en ciseaux (14.i) présentent une longueur structurelle (L₀),
- le système de surveillance (10) présente au moins un entraînement de basculement (26) pour mouvoir en lacet ledit au moins un écran (12) autour de l'axe de basculement (A₁₂) de l'écran, et
- la longueur structurelle et une plage angulaire dudit au moins un entraînement de basculement (26) sont choisies de telle sorte qu'un contact de deux écrans (12) d'un groupe d'écrans est exclu, indépendamment d'une position de lacet par rapport à l'axe de basculement (A₁₂) de l'écran.

7. Système de surveillance (10) selon l'une des revendications précédentes,
**caractérisé en ce que**
les écrans (12) sont fixés à la base (16) solidairement en rotation par rapport à un mouvement de rotation autour d'un axe de roulis horizontal.

8. Bâtiment comportant un système de surveillance (10) selon l'une des revendications précédentes,
**caractérisé en ce que**
la base (16) est suspendue à un plafond (41) du bâtiment ou à un mât (40).
